# EUROPÄISCHE PATENTSCHRIFT

(11) **EP 3 386 773 B1**
(45) Veröffentlichungstag und Bekanntmachung des Hinweises auf die Patenterteilung: **20.11.2019**
(21) Anmeldenummer: 16770236.4
(22) Anmeldetag: 15.09.2016
(51) Int. Cl.: B60C 11/13, B60C 11/03

(54) **FAHRZEUGLUFTREIFEN**
PNEUMATIC TIRE
PNEUMATIQUE

(30) Priorität: 09.12.2015 DE 102015224713
(43) Veröffentlichungstag der Anmeldung: 17.10.2018
(73) Patentinhaber: Continental Reifen Deutschland GmbH, 30165 Hannover (DE)
(72) Erfinder: HÄRTWIG, Andreas, 30419 Hannover (DE); YEO, Chun Yi, 30627 Hannover (DE); KRISTEN, Florian, 30171 Hannover (DE)
(74) Vertreter: Finger, Karsten
(86) Internationale Anmeldenummer: PCT/EP2016/071742
(87) Internationale Veröffentlichungsnummer: WO 2017/097450

(56) Entgegenhaltungen:
- EP-A1- 1 695 844
- EP-A2- 1 106 393
- DE-A1- 4 300 695
- DE-A1-102010 060 946

## Beschreibung

Die Erfindung betrifft ein drehrichtungsgebundenes Laufstreifenprofil eines Nutzfahrzeugreifens, welches in axialer Richtung A des Reifens zweigeteilt ausgebildet ist, mit zwei axial nebeneinander angeordneten Profilblockreihen, die jeweils aus über den Umfang des Reifens hintereinander angeordneten und durch Schrägrillen voneinander getrennten Profilblockelementen ausgebildet sind und dabei jeweils einen axialen Erstreckungsteil des Laufstreifenprofiles bilden, wobei die Schrägrillen einer Profilblockreihe längs ihrer axialen Erstreckung durch diese Profilblockreihe hindurch von der anderen Profilblockreihe ausgehend mit ihrer Haupterstreckungsrichtung unter Einschluss eines Neigungswinkels α zur axialen Richtung A geneigt ausgebildet sind.

Derartige Fahrzeugluftreifen sind bekannt.

Nutzfahrzeugreifen für den sogenannten "Construction"-Einsatz, wie z.B. an Betonmischfahrzeugen oder Kippfahrzeugen für Baustellen sollen eine hohe Profilhaltbarkeit und gute Traktionseigenschaften auch auf losem Untergrund, wie er häufig auf Baustellen zu finden ist, ermöglichen. Hierzu ist es bekannt, derartige Nutzfahrzeugreifen mit einem besonders grobstollig ausgebildeten Klotzprofil mit groben, festen Profilblockelementen, die lediglich durch Querrillen voneinander getrennt sind, auszubilden. Dies ermöglicht ein regelrechtes Eingraben des Profils auf losem Untergrund und somit gute Traktion. Auf herkömmlicher, gut befestigter Straßenoberfläche, auf denen der direkte Oberflächenkontakt der radial äußeren Oberfläche der Profilblockelemente zur Straßenoberfläche für Traktion wesentlich ist, ist die Traktion durch Eingraben nicht möglich ist. Auf derartigen gut befestigten Straßenoberflächen bilden die grobstollig ausgebildeten Profile, bei denen die Blockelemente lediglich durch Querrillen voneinander getrennt sind, verstärkt Sägezahneffekte aus, da die steifen Profilblockelemente mit den durch die Querrillen gebildeten Kanten im ein- und auslaufenden Bereich unterschiedlich belastet und abgerieben werden. Der verstärkte Sägezahneffekt führt dabei zu erhöhtem Reifenabrollgeräusch und Laufunruhe.

Aus der US 5,127,455 ist es bekannt, einen laufrichtungsungebundenen Nutzfahrzeugreifen mit Profilblockelementen auszubilden, welche durch schräg orientierte Rillen begrenzt sind. Dieser laufrichtungsungebundene Reifen ist dabei beiderseits einer zentralen Umfangsrippe jeweils im Reifenschulterbereich mit Profilblockreihen ausgebildet. Die Schrägrillen in den Profilblockreihen sind dabei längs ihrer axialen Erstreckung mit Abschnitten mit unterschiedlichem Neigungswinkel zur axialen Richtung A ausgebildet, wobei der Neigungswinkel der einzelnen Erstreckungsabschnitte einer einzigen einzelnen Schrägrille auch mit wechselnder Neigungsrichtung ausgebildet ist. Durch die über die axiale Erstreckung der Profilblockreihen hinweg ausgebildeten Richtungswechsel der Neigungsrichtung ausgebildeten in Umfangsrichtung erstreckten Spitzen der Profilblockelementflanken innerhalb der Profilblockelemente wird die Entstehung von Sägezahneffekte weiter begünstigt. Die Übertragung von Antriebskräften wird reduziert. Der Richtungswechsel ermöglicht keine Ausbildung eines drehsinngebundenen V-Profils.

Aus der EP 1 695 844 A1 ist ein Pkw-Fahrzeugluftreifen mit Winterlaufflächenprofil bekannt, bei dem benachbarte Profilblockreihen mit in Umfangsrichtung hintereinander angeordneten jeweils durch Schrägrillen voneinander getrennten Profilblockelementen ausgebildet sind. Die Schrägrillen der einen Profilblockreihe sind in ihrem Neigungsverlauf gegenläufig zu den Schrägrillen der anderen Profilblockreihe ausgerichtet.

Der Erfindung liegt die Aufgabe zugrunde, derartige Nutzfahrzeugreifen mit gutem Eingrabverhalten auf losem Untergrund mit verbesserter Straßeneignung zu ermöglichen.

Die Aufgabe wird erfindungsgemäß durch die Ausbildung eines drehrichtungsgebundenen Laufstreifenprofils eines Nutzfahrzeugreifens, welches in axialer Richtung A des Reifens zweigeteilt ausgebildet ist, mit zwei axial nebeneinander angeordneten Profilblockreihen, die jeweils aus über den Umfang des Reifens hintereinander angeordneten und durch Schrägrillen voneinander getrennten Profilblockelementen ausgebildet sind und dabei jeweils einen axialen Erstreckungsteil des Laufstreifenprofiles bilden, wobei die Schrägrillen einer Profilblockreihe längs ihrer axialen Erstreckung durch diese Profilblockreihe hindurch von der anderen Profilblockreihe ausgehend mit ihrer Haupterstreckungsrichtung unter Einschluss eines Neigungswinkels α zur axialen Richtung A geneigt ausgebildet sind, gemäß den Merkmalen von Anspruch 1 gelöst, bei dem die Schrägrillen der einen Profilblockreihe in Umfangsrichtung U gesehen eine entgegengesetzt orientierte Neigungsrichtung wie die Schrägrillen der anderen Profilblockreihe aufweisen und der Neigungswinkel α der Schrägrillen beider Profilblockreihen jeweils mit 25°≤α≤35° ausgebildet ist, und bei dem die Schrägrillen einer Profilblockreihe längs ihrer axialen Erstreckung durch die jeweilige Profilblockreihe hindurch jeweils ausgehend von der anderen Profilblockreihe mit alternierend hintereinander angeordneten ersten und zweiten Erstreckungsabschnitten ausgebildet sind, wobei die Schrägrillen jeweils längs ihrer Erstreckung in den ersten Erstreckungsabschnitten einen Neigungswinkel γ mit 10°≤γ<α zur axialen Richtung A und in den zweiten Erstreckungsabschnitten einen Neigungswinkel β mit α<β≤60° zur axialen Richtung A einschließen.

Die Ausbildung ermöglicht es, ein drehrichtungsgebundenes Nutzfahrzeugprofil mit V-förmiger Struktur für eine optimale Antriebskraftübertragung umzusetzen. Dabei kann durch die Schrägrillenausbildung mit Neigungswinkel α das für den Einsatz auf losen Untergrund grobstollige, gewünschte Blockprofil weiterhin einfach umgesetzt werden. Die Ausbildung mit den alternierenden Abschnitten ermöglicht es dabei, ohne Orientierungswechsel innerhalb der Profilblockreihen die Rillen mit wechselnden Neigungsabschnitten auszubilden, wodurch hohe Kraftübertragung auf loser Oberfläche sowie auf Straßenoberfläche gut umgesetzt werden kann. Die alternierende Abfolge der ersten und zweiten Erstreckungsabschnitte ermöglicht es dabei, den Sägezahneffekt zu reduzieren. Somit ist der wechselnde Einsatz derartiger Nutzfahrzeugreifen sowohl auf losem Untergrund als auch auf Straßenoberfläche bei guter Haltbarkeit und hohen Traktionseigenschaften in einfacher Weise umsetzbar.

Besonders vorteilhaft ist die Ausbildung eines Fahrzeugreifens gemäß den Merkmalen von Anspruch 2, wobei die Schrägrillen der ersten Profilblockreihe mit ihrem zur zweiten Profilblockreihe gerichteten Erstreckungsanfang gegenüber der Position des zur ersten Profilblockreihe gerichteten Erstreckungsanfangs der Schrägrillen der zweiten Profilblockreihe jeweils in Umfangsrichtung versetzt angeordnet sind. Hierdurch wird in einfacher Weise eine Verteilung lateraler Öffnungen im Profil ermöglicht, bei der in jedem beliebigen Profilabschnitt in Umfangsrichtung eine optimale Traktion mittels lateraler Öffnungen sicher umgesetzt werden kann.

Besonders vorteilhaft ist die Ausbildung eines Fahrzeugreifens gemäß den Merkmalen von Anspruch 3, wobei die Profilblockelemente der ersten Profilblockreihe in Umfangsrichtung U jeweils durch zwei hintereinander angeordnete Schrägrillen der ersten Profilblockreihe und zwischen den beiden Schrägrillen zur zweiten Profilblockreihe hin durch einen Erstreckungsabschnitt einer Schrägrille der zweiten Profilblockreihe begrenzt wird, und wobei die Profilblockelemente der zweiten Profilblockreihe in Umfangsrichtung U jeweils durch zwei hintereinander angeordnete Schrägrillen der zweiten Profilblockreihe und zwischen den beiden Schrägrillen zur ersten Profilblockreihe hin durch einen Erstreckungsabschnitt einer Schrägrille der ersten Profilblockreihe begrenzt wird. Die auf diese Weise gebildete Trennung der Blockreihen unter Überlappung in der Reifenmitte kann in einfacher Weise eine besonders gute Traktion auf losem Untergrund sicher umgesetzt werden, unter Beibehaltung von ausreichend Laufflächenmaterial in der Reifenmitte für gute Abriebeigenschaften im Straßeneinsatz.

Besonders vorteilhaft ist die Ausbildung eines Fahrzeugreifens gemäß den Merkmalen von Anspruch 4, wobei die Schrägrillen einer Profilblockreihe jeweils an ihrem zur anderen Profilblockreihe weisenden Erstreckungsanfang jeweils mit einem ersten Erstreckungsabschnitt ausgebildet sind. Hierdurch wird gerade in dem zur Übertragung hoher Traktionskräfte beim Antreiben besonders wichtigen Bereich der axialen Profilmitte auch zur Übertragung optimiert ausgebildet.

Besonders vorteilhaft ist die Ausbildung eines Fahrzeugreifens gemäß den Merkmalen von Anspruch 5, wobei die Schrägrillen einer Profilblockreihe jeweils an ihrem von der anderen Profilblockreihe wegweisenden, in einer Reifenschulter ausgebildeten Erstreckungsende jeweils mit einem ersten Erstreckungsabschnitt ausgebildet sind. Hierdurch wird gerade in dem zur Übertragung hoher Traktionskräfte beim Bremsen besonders wichtigen Bereich der Reifenschulter auch zur Übertragung hoher Traktionskräfte weiter optimiert ausgebildet.

Besonders vorteilhaft ist die Ausbildung eines Fahrzeugreifens gemäß den Merkmalen von Anspruch 6, wobei die Schrägrillen längs ihrer Erstreckung eine ungerade Anzahl von aus ersten und zweiten Erstreckungsabschnitten gebildeten Erstreckungsabschnitten aufweisen. Durch diese Ausbildung wird eine Optimierung des Reifengeräusches ermöglicht.

Besonders vorteilhaft ist die Ausbildung eines Fahrzeugreifens gemäß den Merkmalen von Anspruch 7, wobei die Schrägrillen längs ihrer Erstreckung vier bis acht aus ersten und zweiten Erstreckungsabschnitten gebildete Erstreckungsabschnitte aufweisen. Die Ausbildung ermöglicht ein optimales Ausbalancieren von guter Traktion und geringem Reifengeräusch andererseits.

Besonders vorteilhaft ist die Ausbildung eines Fahrzeugreifens gemäß den Merkmalen von Anspruch 8, wobei die Profilblockelemente einer Profilblockreihe jeweils in axialer Richtung A jeweils von der Reifenschulter ausgehend nach axial innen zur anderen Profilblockreihe hin über die Äquatorebene Ä-Ä des Reifens hinweg erstreckt sind und dort enden. Hierdurch kann die Traktion über ausreichend lateral erstreckte Öffnungen gerade im Bereich der Reifenmitte weiter verbessert werden.

Die Erfindung wird im Folgenden an Hand der in den Figuren 1 bis 4 dargestellten Ausführungsbeispiele näher erläutert. Hierin zeigen
- Fig.1: einen Umfangsabschnitt eines Laufstreifenprofils eines Nutzfahrzeugreifens für den "Construction"-Einsatz in Draufsicht,
- Fig.2: das Laufstreifenprofil von Fig.1 in Schnittdarstellung gemäß Schnitt II-II von Fig.1,
- Fig.3: das Laufstreifenprofil eines Nutzfahrzeugreifens von Fig.1 in alternativer Ausführung und
- Fig.4: das Laufstreifenprofil von Fig.3 in Schnittdarstellung gemäß Schnitt IV-IV von Fig.3.

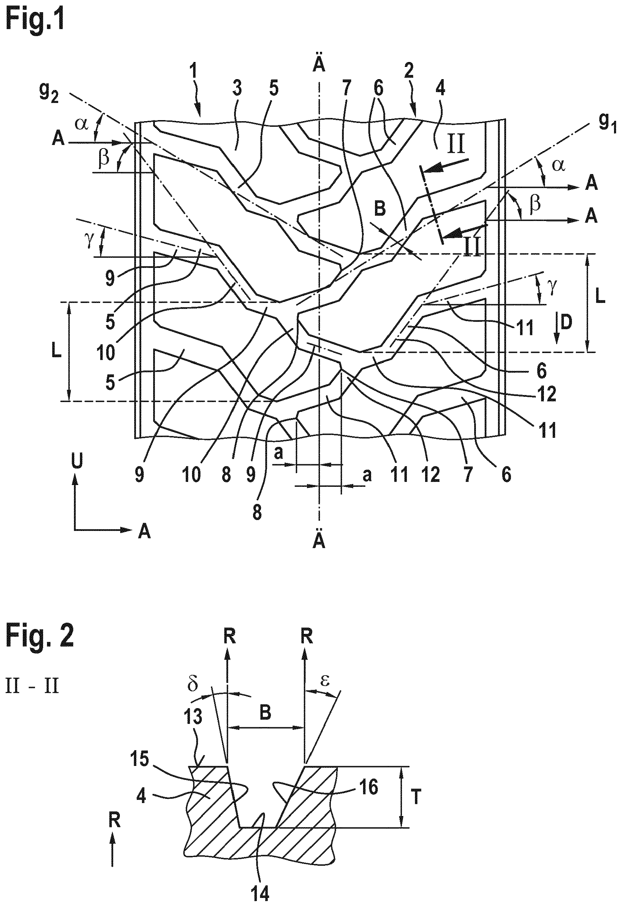

Die Figuren 1 und 2 zeigen einen Nutzfahrzeugluftreifen für den Einsatz auf losem Untergrund und auf fester Straßenoberfläche mit einem in axialer Richtung A des Fahrzeugluftreifens zweigeteilten Laufstreifenprofil. In Fig.1 ist die Äquatorebene Ä-Ä des Fahrzeugluftreifens eingezeichnet. Wie in Fig.1 zu erkennen ist, ist das Laufstreifenprofil durch die Ausbildung von zwei in axialer Richtung A des Fahrzeugluftreifens nebeneinander angeordneten Profilblockreihen 1 und 2 axial zweigeteilt. Die Profilblockreihe 1 ist dabei in bekannter Weise in Umfangsrichtung U des Fahrzeugluftreifens aus über den Umfang verteilt angeordneten und jeweils durch Schrägrillen 5 von einander beabstandeten Profilblockelementen 3 ausgebildet. Die Profilblockreihe 2 ist in bekannter Weise in Umfangsrichtung U aus über den Umfang des Fahrzeugluftreifens hintereinander verteilt angeordneten und jeweils durch Schrägrillen 6 voneinander getrennten Profilblockelementen 4 ausgebildet. Dabei ist jedes Profilblockelement 3 der Profilblockreihe 1 in Umfangsrichtung U des Fahrzeugluftreifens in beide Orientierungen der Umfangsrichtung U jeweils durch eine Schrägrille 5 begrenzt. Ebenso ist jedes Profilblockelement 4 der Profilblockreihe 2 in beide Orientierungen der Umfangsrichtung U jeweils durch einer Schrägrille 6 begrenzt. Wie in Fig.2 am Beispiel der Profilblockreihe 2 dargestellt ist, sind die Profilblockelemente 4 und 3 in radialer Richtung R des Fahrzeugluftreifens nach außen hin jeweils durch eine die Bodenkontaktoberfläche bildende, radial äußere Oberfläche 13 begrenzt.

Die Profilblockelemente 4 der Profilblockreihe 2 erstrecken sich in axialer Richtung A des Fahrzeugluftreifens in Richtung zur Profilblockreihe 1 hin bis zu einer Spitze 8, welche im Abstand a von der Äquatorebene Ä-Ä am jeweiligen Profilblockelement 4 ausgebildet ist. Die Profilblockelemente 3 der Profilblockreihe 1 erstrecken sich in axialer Richtung A zur Profilblockreihe 2 hin bis zu einer Spitze 7, welche im Abstand a von der Äquatorebene Ä-Ä am jeweiligen Profilblockelement 3 ausgebildet ist. Wie in Fig.1 zu erkennen ist, erstrecken sich die Profilblockelement 4 der Profilblockreihe 2 dabei jeweils in axialer Richtung A zur Profilblockreihe 1 hin zwischen den Spitzen 7 von zwei in Umfangsrichtung hintereinander angeordneten Profilblockelementen 3 über die Äquatorebene Ä-Ä hinaus bis zu ihrer Spitze 8. Ebenso erstrecken sich die Profilblockelemente 3 in axialer Richtung A zur Profilblockreihe 2 hin jeweils zwischen den Spitzen 8 zweier in Umfangsrichtung U benachbarten Profilblockelemente 4 der Profilblockreihe 2 über die Äquatorebene Ä-Ä hinaus bis zu ihrer Spitze 7. Die Profilblockelemente 4 und 3 sind mit ihrer axialen Erstreckung somit in axialer Richtung A um das Maß (2a) überlappt ausgebildet.

Wie in Fig. 1 zu erkennen ist, erstrecken sich die Schrägrillen 5 dabei von der axialen Position der angrenzenden Spitze 7 des Profilblockelementes 3 ausgehend durch die Profilblockreihe 1 hindurch über die Äquatorebene Ä-Ä hinweg in axialer Richtung A nach außen hin in die - in Fig.1 links dargestellte - Reifenschulter bis zu der die Profilblockreihe 1 - und somit das Laufstreifenprofil - nach axial außen hin begrenzenden Flanke.

Wie in Fig. 1 zu erkennen ist, erstrecken sich in analoger Weise Schrägrillen 6 dabei von der axialen Position der angrenzenden Spitze 8 des Profilblockelementes 4 ausgehend durch die Profilblockreihe 2 hindurch über die Äquatorebene Ä-Ä hinweg in axialer Richtung A nach außen hin bis zu der die Profilblockreihe 2 und somit das Laufstreifenprofil in der - in Fig.1 rechts dargestellten - Reifenschulter nach axial außen hin begrenzenden Flanke.

Die Schrägrillen 5 sind dabei ausgehend von der axialen Position der Spitzen 7 des angrenzenden Profilblockelementes 3 in axialer Richtung A nach außen hin bis zu der die Profilblockelemente 3 und somit die Profilblockreihe 1 und das Laufstreifenprofil in axialer Richtung A zu der von dem der Äquatorebene Ä-Ä und somit von Profilblockreihe 2 wegweisenden Erstreckungsende begrenzenden Flanke der Profilblockelemente 3 - in der in Fig.1 links dargestellten Reifenschulter - erstreckt ausgebildet und verlaufen dabei mit einem längs einer Geraden g₂ erstreckten Haupterstreckungsverlauf ausgebildet, welche einen Neigungswinkel α zur axialen Richtung A einschließt. Ebenso sind die Schrägrillen 6 jeweils ausgehend von der axialen Position der Spitze 8 des angrenzenden Profilblockelementes 4 in axialer Richtung nach außen hin bis zu der die Profilblockelemente 4 und somit die Profilblockreihe 2 und das Laufstreifenprofil in axialer Richtung A zu der von dem der Äquatorebene Ä-Ä und somit von Profilblockreihe 1 wegeweisenden Erstreckungsende begrenzenden Flanke der Profilblockelemente 4 - in der in Fig.1 rechts dargestellten Reifenschulter - erstreckt ausgebildet und verlaufen dabei mit einem längs einer Geraden g₁ erstreckten Haupterstreckungsrichtung, welche einen Neigungswinkel α zur axialen Richtung A einschließt. Der Neigungswinkel α ist jeweils mit 25° ≤ α 35°, beispielsweise mit α = 30° ausgebildet. Die Haupterstreckungsrichtung g₁ ist dabei jeweils die Gerade g₁, welche die in der radial äußeren Oberfläche 13 in der axialen Position der Spitze 8 und in der axialen Position der die Profilblockelemente 4 nach außen hin begrenzenden Flanke gemessenen Punkte der Mittellinie der Schrägrille 6 miteinander verbindet. Ebenso ist die Erstreckungsrichtung g₂ diejenige Gerade, welche die in der radial äußeren Oberfläche 13 in der axialen Position der Spitze 7 und in der axialen Position der die Profilblockelemente 3 nach außen hin begrenzenden Flanke gemessenen Punkte der Mittellinie der Schrägrille 5 miteinander verbindet.

Wie in Fig. 1 zu erkennen ist, sind dabei die Haupterstreckungsrichtung g₁ der Profilblockreihe 2 und g₂ der Profilblockreihen 1 längs der Erstreckung in Umfangsrichtung U des Fahrzeugluftreifens entgegengesetzt zueinander geneigt. Hierdurch bilden die Schrägrillen 5 und 6 ein V-förmiges Profil.

Wie in Fig. 1 zu erkennen ist, sind die Schrägrillen 5 längs ihrer axialen Erstreckung ausgehend von der axialen Position der Spitze 7 zu ihrem - in Fig. 1 in der linken Schulter - ausgebildeten Erstreckungsende aus in alternativer Abfolge hintereinander angeordneten ersten Erstreckungsabschnitten 9 und zweiten Erstreckungsabschnitten 10 ausgebildet. Ebenso sind die Schrägrillen 6 längs ihrer axialen Erstreckung ausgehend von der axialen Position der Spitze 8 bis zu ihrem -in Fig. 1 in der rechten Schulter - ausgebildeten Erstreckungsende aus in alternierender Abfolge hintereinander angeordneten ersten Erstreckungsabschnitten 11 und zweiten Erstreckungsabschnitten 12 ausgebildet.

Jede Schrägrille 5 ist längs ihrer Erstreckung im ersten Erstreckungsabschnitt 9 mit ihrem Erstreckungsverlauf jeweils unter einem Einschluss eines Neigungswinkels γ zur axialen Richtung A des Fahrzeugluftreifens und im zweiten Erstreckungsabschnittes 10 unter Einschluss eines Neigungswinkels β zur axialen Richtung A des Fahrzeugluftreifens geneigt ausgebildet. Die Erstreckung und somit die Neigungswinkel β und γ werden jeweils längs der Mittellinie der jeweiligen Schrägrille 5 in der radial äußeren Oberfläche 13 gemessen. Die Neigung ist im ersten Erstreckungsabschnitt 9 und im zweiten Erstreckungsabschnitt 10 jeweils mit gleicher Neigungsorientierung gewählt ausgebildet wie die Haupterstreckungsrichtung g₂ der Schrägrille 5.

Analog hierzu ist jede Schrägrille 6 längs ihrer Erstreckung im ersten Erstreckungsabschnitt 11 mit ihrem Erstreckungsverlauf jeweils unter einem Einschluss eines Neigungswinkels γ zur axialen Richtung A des Fahrzeugluftreifens und im zweiten Erstreckungsabschnittes 12 unter Einschluss eines Neigungswinkels β zur axialen Richtung A des Fahrzeugluftreifens geneigt ausgebildet. Die Erstreckung und somit die Neigungswinkel β und γ werden jeweils längs der Mittellinie der jeweiligen Schrägrille 6 in der radial äußeren Oberfläche 13 gemessen. Die Neigung ist im ersten Erstreckungsabschnitt 11 und im zweiten Erstreckungsabschnitt 12 jeweils mit gleicher Neigungsorientierung gewählt ausgebildet wie die Haupterstreckungsrichtung g₁ der Schrägrille 6.

Die Neigungswinkel γ und β sind dabei mit 10° ≤ γ < α und α < β ≤ 60° gewählt. Beispielsweise ist γ mit γ = 15° und β mit β = 50° gewählt.

Wie in Fig. 1 zu erkennen ist, ist die Schrägrille 6 dabei jeweils an ihrem Erstreckungsanfang zwischen der axialen Position der Spitzen 8 und 7 mit einem ersten Erstreckungsabschnitt 11 ausgebildet. Ebenso ist die Schrägrille 5 jeweils an ihrem Erstreckungsanfang zwischen den axialen Positionen der Punkte 7 und 8 mit einem ersten Erstreckungsabschnitt 9 ausgebildet. Ebenso sind - wie in Fig. 1 zu erkennen ist - die Schrägrillen 5 und 6 jeweils an ihrem im Bereich der Reifenschulter ausgebildeten Erstreckungsende mit einem ersten Erstreckungsabschnitt 11 bzw. 9 ausgebildet. Die Schrägrillen 5 und 6 sind somit längs ihrer Erstreckung mit einer ungeraden Zahl von hintereinander angeordneten ersten bzw. zweiten Erstreckungsabschnitten ausgebildet und beginnen und enden jeweils mit einem ersten Erstreckungsabschnitt 11 bzw.9.

Im dargestellten Ausführungsbeispiel sind die Querrillen 5 und 6 jeweils mit fünf in axialer Richtung A hintereinander angeordneten Erstreckungsabschnitten ausgebildet.

In Fig.1 ist die vorgesehene Drehrichtung D des Fahrzeugreifens bei Vorwärtsfahrt mit Pfeildarstellung eingetragen.

Der zwischen den axialen Positionen der Spitzen 7 und 8 ausgebildete erste Erstreckungsabschnitt 11 und der direkt anschließende zweite Erstreckungsabschnitt 12 der Schrägrille 6 bilden mit ihrer in Drehrichtung D der Schrägrille 6 vorgeordneten Rillenwand jeweils die zur Schrägrille 6 hinweisende Flanke des im Erstreckungsbereich der Schrägrille 6 zwischen den Spitzen 7 und 8 angrenzenden Profilblockelementes 3 und mit ihrer in Drehrichtung D nachgeordneten Rillenwand die zur Schrägrille 6 hinweisende Flanke des durch die Schrägrille 6 begrenzten Profilblockelementes 4. Außerhalb des zwischen den Spitzen 7 und 8 ausgebildeten axialen Erstreckungsabschnittes bilden die Schrägrillen 6 jeweils mit beiden Rillenwänden die in Umfangsrichtung U zur jeweiligen Schrägrille 6 gerichteten Flanken der beiden durch die Schrägrille 6 begrenzten Profilblockelemente 4.

Der zwischen den axialen Positionen der Spitzen 7 und 8 ausgebildete erste Erstreckungsabschnitt 9 und der direkt anschließende zweite Erstreckungsabschnitt 10 der Schrägrille 5 bilden mit ihrer in Drehrichtung D der Schrägrille 5 vorgeordneten Rillenwand jeweils die zur Schrägrille 5 hinweisende Flanke des im Erstreckungsbereich der Schrägrille 5 zwischen den Spitzen 7 und 8 angrenzenden Profilblockelementes 4 und mit ihrer in Drehrichtung D nachgeordneten Rillenwand die zur Schrägrille 5 hinweisende Flanke des durch die Schrägrille 5 begrenzten Profilblockelementes 3. Außerhalb des zwischen den Spitzen 7 und 8 ausgebildeten axialen Erstreckungsabschnittes bilden die Schrägrillen 5 jeweils mit beiden Rillenwänden die in Umfangsrichtung U zur jeweiligen Schrägrille 5 gerichteten Flanken der beiden durch die Schrägrille 5 begrenzten Profilblockelemente 3.

Wie in Fig. 2 am Beispiel einer Schrägrille 6 dargestellt ist, sind die Schrägrillen 5 und 6 jeweils mit einer in radialer Richtung R gemessenen Profiltiefe T ausgebildet, welche sich ausgehend von der radial äußeren Oberfläche 13 bis zu dem die jeweilige Schrägrille 5 bzw. 6 nach radial innen hin begrenzenden Rillengrund 14 erstreckt. Die Profiltiefe T ist mit 12mm ≤T≤ 25mm beispielsweise mit T= 19mm ausgebildet.

Die Schrägrillen 5 bzw. 6 sind mit einer senkrecht zum jeweiligen Erstreckungsverlauf im einzelnen Erstreckungsabschnitt gemessenen Rillenbreite B mit 10mm ≤ B ≤ 30mm ausgebildet.

Fig.1 zeigt auch ein Ausführungsbeispiel, bei dem die Rillenbreite B dabei längs der Erstreckung der jeweiligen Schrägrille 5 bzw. 6 von axial innen nach außen zur Reifenschulter hin mit zunehmender Breite B ausgebildet, wobei beispielsweise die geringste Breite einer jeden Schrägrille 5 bzw.5 mit B = 15mm und die größte Breite mit B = 20mm ausgebildet ist.

Fig.2 zeigt auch ein Ausführungsbeispiel an Hand einer Schrägrille 6 , bei dem die Schrägrillen 5 bzw. 6 beiderseits des Rillengrundes 14 jeweils mit Rillenwänden 15 bzw. 16 ausgebildet sind, die jeweils die das angrenzende Profilblockelement - hier das Profilblockelement 4 - begrenzende Flanke bildet. Die Rillenwände 15 und 16 können dabei, wie in Fig. 2 dargestellt ist, in Schnittebenen senkrecht zum Erstreckungsverlauf der Schrägrille im jeweiligen Erstreckungsabschnitt unter Einschluss eines Neigungswinkels zur radialen Richtung R ausgebildet sein, wobei der Neigungswinkel δ der Rillenwand 15 in einem Ausführungsbeispiel kleiner gewählt ist als der Neigungswinkel ε der Rillenwand 16.

Wie in Fig. 1 zu erkennen ist, mündet jede Schrägrille 5 jeweils in der axialen Position der Spitze 7 des an die Schrägrille 5angrenzenden Profilblockelementes 3 im axialen Abstand (2a) von dem in der axialen Position des durch die Spitze 8 des Profilblockelementes 4 gebildeten und zur Profilblockreihe 2 hinweisenden Erstreckungsende der Schrägrille 6 in die Schrägrille 6. Ebenso mündet jede Schrägrille 6 jeweils in der axialen Position der Spitze 8 des an die Schrägrille 6 angrenzenden Profilblockelementes 4 im axialen Abstand (2a) von dem in der axialen Position des durch die Spitze 7 des Profilblockelementes 3 gebildeten und zur Profilblockreihe 1 hinweisenden Erstreckungsende der Schrägrille 5 in die Schrägrille 5.

Die Schrägrillen 6 und 5 sind somit mit ihrem jeweils zur anderen Profilblockreihe hinweisenden Erstreckungsende sowohl in axialer Richtung A des Fahrzeugluftreifens als auch in Umfangsrichtung U des Fahrzeugluftreifens zueinander versetzt angeordnet.

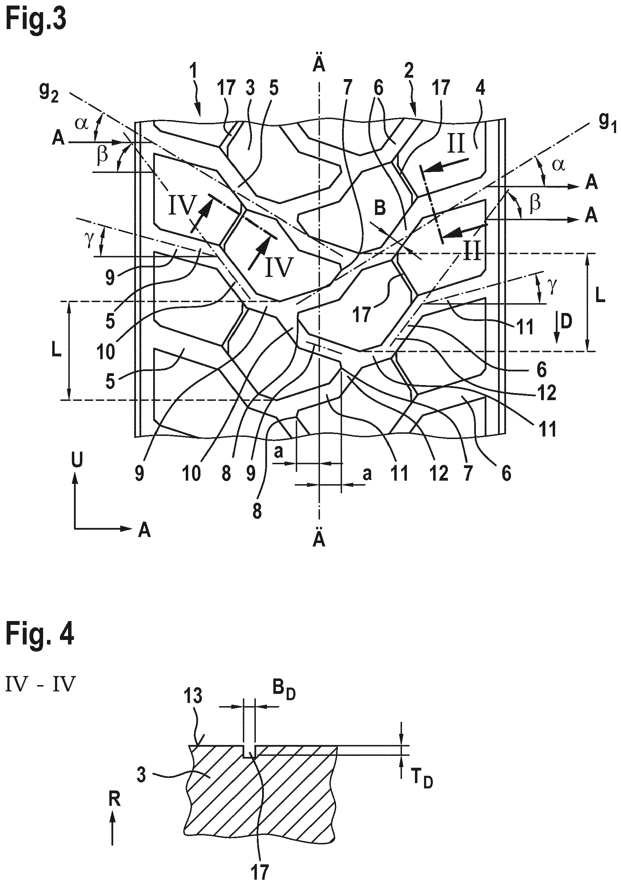

Die Figuren 3 und 4 zeigen ein weiteres Ausführungsbeispiel, bei welchem lediglich in den Profilblockelementen 3 und 4 zusätzlich in der radial äußeren Oberfläche 13 noch feine Dekorrillen 17 ausgebildet sind, welche sich in Umfangsrichtung U des Fahrzeugluftreifens gesehen durch das jeweilige Profilblockelement 3 und 4 hindurch erstrecken und in die beiden das jeweilige Profilblockelement 3 bzw. 4 begrenzenden Schrägrillen 5 bzw. 6 münden. Die Dekorrillen sind dabei mit einer Tiefe T_{D} und mit einer in der radial äußeren Oberfläche 13 gemessenen Breite B_{D} ausgebildet mit T_{D} = 3mm und B_{D} = 5mm. Die Dekorrillen 17 sind dabei - wie in Fig. 3 zu erkennen ist - längs ihrer Erstreckung von Schrägrille 5 zu Schrägrille 5 mit einer Haupterstreckungsrichtung ausgerichtet, deren Richtungskomponente in Umfangsrichtung U größer ist als die Richtungskomponente in axialer Richtung A. Die Dekorrillen 17 in der Profilblockreihe 4 sind dabei längs ihrer Erstreckung mit einer zur Neigungsrichtung der Haupterstreckungsrichtung g₁ der Schrägrillen 6 entgegengesetzen Neigungsrichtung ausgebildet. Ebenso ist die Neigungsrichtung der Dekorrillen 17 der Profilblockreihe 3 dabei längs ihrer Erstreckung mit einer zur Neigungsrichtung der Haupterstreckungsrichtung g₂ der Schrägrillen 5 entgegengesetzen Neigungsrichtung ausgebildet.

In einem Ausführungsbeispiel ist der Nutzfahrzeugluftreifen ein Nutzfahrzeugluftreifen mit einer in axialer Richtung A gemessenen Laufstreifenbreite mit 240mm bis 280 mm.

In einem Ausführungsbeispiel ist der Nutzfahrzeugluftreifen ein Nutzfahrzeugluftreifen der Dimension 315/80R22.5. In einem anderen Ausführungsbeispiel ist der Nutzfahrzeugluftreifen ein Nutzfahrzeugluftreifen der Dimension 295/80R22.5. In einem anderen Ausführungsbeispiel ist der Nutzfahrzeugluftreifen ein Nutzfahrzeugluftreifen der Dimension 13R22.5.

### Bezugszeichenliste

### (Teil der Beschreibung)

- 1: Profilblockreihe
- 2: Profilblockreihe
- 3: Profilblockelement
- 4: Profilblockelement
- 5: Schrägrille
- 6: Schrägrille
- 7: Spitze
- 8: Spitze
- 9: Erster Erstreckungsabschnitt
- 10: Zweiter Erstreckungsabschnitt
- 11: Erster Erstreckungsabschnitt
- 12: Zweiter Erstreckungsabschnitt
- 13: Radial äußere Oberfläche
- 14: Rillengrund
- 15: Rillenwand
- 16: Rillenwand
- 17: Dekorrille

## Patentansprüche

1. Drehrichtungsgebundenes Laufstreifenprofil eines Nutzfahrzeugreifens, welches in axialer Richtung A des Reifens zweigeteilt ausgebildet ist, mit zwei axial nebeneinander angeordneten Profilblockreihen (1,2), die jeweils aus über den Umfang des Reifens hintereinander angeordneten und durch Schrägrillen (5,6) voneinander getrennten Profilblockelementen (3,4) ausgebildet sind und dabei jeweils einen axialen Erstreckungsteil des Laufstreifenprofiles bilden, wobei die Schrägrillen (5,6) einer Profilblockreihe (1,2) längs ihrer axialen Erstreckung durch diese Profilblockreihe (1,2) hindurch von der anderen Profilblockreihe (2,1) ausgehend mit ihrer Haupterstreckungsrichtung unter Einschluss eines Neigungswinkels α zur axialen Richtung A geneigt ausgebildet sind,
**dadurch gekennzeichnet,**
**dass** die Schrägrillen (6) der einen Profilblockreihe (2) in Umfangsrichtung U gesehen eine entgegengesetzt orientierte Neigungsrichtung wie die Schrägrillen (5) der anderen Profilblockreihe (1) aufweisen und der Neigungswinkel α der Schrägrillen (5,6) beider Profilblockreihen (1,2) jeweils mit 25°≤α≤35° ausgebildet ist,
**dass** die Schrägrillen (5,6) einer Profilblockreihe (1,2) längs ihrer axialen Erstreckung durch die jeweilige Profilblockreihe (1,2) jeweils ausgehend von der anderen Profilblockreihe (2,1) mit alternierend hintereinander angeordneten ersten (9,11) und zweiten (10,12) Erstreckungsabschnitten ausgebildet sind, wobei die Schrägrillen (5,6) jeweils längs ihrer Erstreckung in den ersten Erstreckungsabschnitten (9,11) einen Neigungswinkel γ mit 10°≤γ<α zur axialen Richtung A und in den zweiten Erstreckungsabschnitten (10,12) einen Neigungswinkel β mit α<β≤60° zur axialen Richtung A einschließen.

2. Laufstreifenprofil gemäß den Merkmalen von Anspruch 1,
wobei die Schrägrillen (5) der ersten Profilblockreihe (1) mit ihrem zur zweiten Profilblockreihe (2) gerichteten Erstreckungsanfang (7) gegenüber der Position des zur ersten Profilblockreihe (1) gerichteten Erstreckungsanfangs (8) der Schrägrillen (6) der zweiten Profilblockreihe (2) jeweils in Umfangsrichtung U versetzt angeordnet sind.

3. Fahrzeugluftreifen mit einem Laufstreifenprofil gemäß den Merkmalen von Anspruch 1 oder 2,
wobei die Profilblockelemente (3) der ersten Profilblockreihe (1) in Umfangsrichtung U jeweils durch zwei hintereinander angeordnete Schrägrillen (5) der ersten Profilblockreihe und zwischen den beiden Schrägrillen (5) zur zweiten Profilblockreihe (2) hin durch einen Erstreckungsabschnitt einer Schrägrille (6) der zweiten Profilblockreihe (2) begrenzt wird, und wobei die Profilblockelemente (4) der zweiten Profilblockreihe (2) in Umfangsrichtung U jeweils durch zwei hintereinander angeordnete Schrägrillen (6) der zweiten Profilblockreihe (2) und zwischen den beiden Schrägrillen (6) zur ersten Profilblockreihe (1) hin durch einen Erstreckungsabschnitt einer Schrägrille (5) der ersten Profilblockreihe (1) begrenzt wird.

4. Fahrzeugluftreifen mit einem Laufstreifenprofil gemäß den Merkmalen von einem oder mehreren der vorangegangenen Ansprüche,
wobei die Schrägrillen (5,6) einer Profilblockreihe (1,2) jeweils an ihrem zur anderen Profilblockreihe (2,1) weisenden Erstreckungsanfang (7,8) jeweils mit einem ersten Erstreckungsabschnitt (9,11) ausgebildet sind.

5. Fahrzeugluftreifen mit einem Laufstreifenprofil gemäß den Merkmalen von einem oder mehreren der vorangegangenen Ansprüche,
wobei die Schrägrillen (5,6) einer Profilblockreihe (1,2) jeweils an ihrem von der anderen Profilblockreihe (2,1) wegweisenden, in einer Reifenschulter ausgebildeten Erstreckungsende jeweils mit einem ersten Erstreckungsabschnitt (9,11) ausgebildet sind.

6. Fahrzeugluftreifen mit einem Laufstreifenprofil gemäß den Merkmalen von einem oder mehreren der vorangegangenen Ansprüche,
wobei die Schrägrillen (5,6) längs ihrer Erstreckung eine ungerade Anzahl von aus ersten und zweiten Erstreckungsabschnitten gebildeten Erstreckungsabschnitten aufweisen.

7. Fahrzeugluftreifen mit einem Laufstreifenprofil gemäß den Merkmalen von einem oder mehreren der vorangegangenen Ansprüche,
wobei die Schrägrillen (5,6) längs ihrer Erstreckung vier bis acht aus ersten und zweiten Erstreckungsabschnitten gebildete Erstreckungsabschnitte aufweisen.

8. Fahrzeugluftreifen mit einem Laufstreifenprofil gemäß den Merkmalen von einem oder mehreren der vorangegangenen Ansprüche,
wobei die Profilblockelemente (3,4) einer Profilblockreihe (1,2) jeweils in axialer Richtung A jeweils von der Reifenschulter ausgehend nach axial innen zur anderen Profilblockreihe (2,1) hin über die Äquatorebene Ä-Ä des Reifens hinweg erstreckt sind und dort enden.

## Claims

1. Rotationally directional tread profile of a commercial vehicle tire, said profile being divided into two parts in the axial direction A of the tire, having two axially adjacent profile block rows (1, 2), each of which is formed from profile block elements (3, 4) that are arranged one behind the other over the circumference of the tire and are separated from one another by diagonal grooves (5, 6) and thereby form a respective axial part of the extent of the tread profile, wherein the diagonal grooves (5, 6) of one profile block row (1, 2) are designed so as to slope along the axial extent of the diagonal grooves through said profile block row (1, 2), starting from the other profile block row (2, 1), such that the main direction of extent of the diagonal grooves forms an angle of inclination α relative to the axial direction A, **characterized**
**in that** the diagonal grooves (6) of one profile block row (2) have a direction of inclination which is oriented oppositely to that of the diagonal grooves (5) of the other profile block row (1) when seen in the circumferential direction U, and the angle of inclination α of the diagonal grooves (5, 6) of both profile block rows (1, 2) is formed such that 25°≤α≤35°,
**in that** the diagonal grooves (5, 6) of one profile block row (1, 2) are formed along the axial extent of the diagonal grooves through the respective profile block row (1,2), in each case starting from the other profile block row (2, 1), such that first (9, 11) and second (10, 12) segments of extent are formed which are arranged one behind the other in an alternating manner, wherein, along the extent of the diagonal grooves, the diagonal grooves (5, 6) each form an angle of inclination γ, where 10°≤γ≤α, with respect to the axial direction A in the first segments of extent (9, 11) and an angle of inclination β, where α≤β≤60°, with respect to the axial direction A in the second segments of extent (10, 12).

2. Tread profile according to the features of Claim 1, wherein the beginning (7) of extent of the diagonal grooves (5) of the first profile block row (1), said beginning being directed toward the second profile block row (2), is in each case arranged so as to be offset in the circumferential direction U with respect to the position of the beginning (8) of extent of the diagonal grooves (6) of the second profile block row (2), said beginning being directed toward the first profile block row (1).

3. Pneumatic vehicle tire having a tread profile according to the features of Claim 1 or 2,
wherein the profile block elements (3) of the first profile block row (1) are each delimited in the circumferential direction U by two successive diagonal grooves (5) of the first profile block row and, between the two diagonal grooves (5), are delimited in the direction of the second profile block row (2) by a segment of extent of a diagonal groove (6) of the second profile block row (2), and wherein the profile block elements (4) of the second profile block row (2) are each delimited in the circumferential direction U by two successive diagonal grooves (6) of the second profile block row (2) and, between the two diagonal grooves (6), are delimited in the direction of the first profile block row (1) by a segment of extent of a diagonal groove (5) of the first profile block row (1).

4. Pneumatic vehicle tire having a tread profile according to the features of one or more of the preceding claims,
wherein the diagonal grooves (5, 6) of one profile block row (1, 2) are each formed with a first segment of extent (9, 11) at the beginning (7, 8) of extent of the diagonal grooves which faces the other profile block row (2, 1).

5. Pneumatic vehicle tire having a tread profile according to the features of one or more of the preceding claims,
wherein the diagonal grooves (5, 6) of one profile block row (1, 2) are each formed with a first segment of extent (9, 11) at that end of extent of the diagonal grooves which faces away from the other profile block row (2, 1), said end being formed in a tire shoulder.

6. Pneumatic vehicle tire having a tread profile according to the features of one or more of the preceding claims,
wherein the diagonal grooves (5, 6) have an uneven number of segments of extent formed from first and second segments of extent along the extent of the diagonal grooves.

7. Pneumatic vehicle tire having a tread profile according to the features of one or more of the preceding claims,
wherein the diagonal grooves (5, 6) have four to eight segments of extent formed from first and second segments of extent along the extent of the diagonal grooves.

8. Pneumatic vehicle tire having a tread profile according to the features of one or more of the preceding claims,
wherein the profile block elements (3, 4) of one profile block row (1, 2) are each extended axially inward, beyond the equatorial plane Ä-Ä of the tire, toward the other profile block row (2, 1) in the axial direction A, in each case starting from the tire shoulder, and end there.

## Revendications

1. Profilé de bande de roulement, lié au sens de rotation, d'un pneumatique de véhicule utilitaire, lequel profilé est conçu en deux parties dans la direction axiale A du pneumatique, le profilé comprenant deux rangées de blocs de profilé (1, 2) qui sont disposées axialement l'une à côté de l'autre, qui sont formées chacune d'éléments de bloc de profilé (3, 4) disposés les uns derrière les autres sur la périphérie du pneumatique et séparés les uns des autres par des rainures obliques (5, 6), et qui forme chacune une partie d'extension axiale du profilé de bande de roulement, les rainures obliques (5, 6) d'une rangée de blocs de profilé (1, 2) étant conçues, le long de leur extension axiale passant à travers cette rangée de blocs de profilé (1, 2) à partir de l'autre rangée de blocs de profilé (2, 1), de manière à être inclinées de façon à ce que leur direction d'extension principale forme un angle d'inclinaison α par rapport à la direction axiale A,
**caractérisé en ce que**
les rainures obliques (6) d'une rangée de blocs de profilé (2) ont, par référence à la direction périphérique U, une direction d'inclinaison opposée par rapport aux rainures obliques (5) de l'autre rangée de blocs de profilé (1) et l'angle d'inclinaison α des rainures obliques (5, 6) des deux rangées de blocs de profilé (1, 2) est conçu à chaque fois de telle sorte que 25° ≤ α ≤ 35°,
les rainures obliques (5, 6) d'une rangée de blocs de profilé (1, 2) sont conçues, le long de leur extension axiale passant à travers la rangée de blocs de profilé (1, 2) respective à partir de l'autre rangée de blocs de profilé (2, 1), avec des premières (9, 11) et deuxièmes (10, 12) parties d'extension disposées alternativement les unes derrière les autres, les rainures obliques (5, 6) formant chacune, dans leur extension dans les premières portions d'extension (9, 11), un angle d'inclinaison γ, tel que 10° ≤ γ < α, par rapport à la direction axiale A et, dans les deuxièmes parties d'extension (10, 12), un angle d'inclinaison β, tel que α < β ≤ 60°, par rapport à la direction axiale A.

2. Profilé de bande de roulement selon les caractéristiques de la revendication 1, les rainures obliques (5) de la première rangée de blocs de profilé (1), leur début d'extension (7) étant dirigé vers la deuxième rangée de blocs de profilé (2), étant disposées de manière décalée dans la direction périphérique U par rapport à la position du début d'extension (8), dirigé vers la première rangée de blocs de profilé (1), des rainures obliques (6) de la deuxième rangée de blocs de profilé (2).

3. Pneumatique de véhicule pourvu d'un profilé de bande de roulement selon les caractéristiques de la revendication 1 ou 2, les éléments de bloc de profilé (3) de la première rangée de blocs de profilé (1) étant chacun limités dans la direction périphérique U par deux rainures obliques (5), disposées l'une derrière l'autre, de la première rangée de blocs de profilé et, entre les deux rainures obliques (5) en direction de la deuxième rangée de blocs de profilé (2), par une partie d'extension d'une rainure oblique (6) de la deuxième rangée de blocs de profilé (2), et les éléments de blocs de profilé (4) de la deuxième rangée de blocs de profilé (2) étant chacun limités dans la direction circonférentielle U par deux rainures obliques (6), disposées l'une derrière l'autre, de la deuxième rangée de blocs de profilé (2) et, entre les deux rainures obliques (6) en direction de la première rangée de blocs de profilé (1), par une partie d'extension d'une rainure oblique (5) de la première rangée de blocs de profilé (1).

4. Pneumatique de véhicule pourvu d'un profilé de bande de roulement selon les caractéristiques de l'une au moins des revendications précédentes, les rainures obliques (5, 6) d'une rangée de blocs de profilé (1, 2) étant chacune conçues avec une première partie d'extension (9, 11) au niveau de leur début d'extension (7, 8) formé dans un épaulement de pneumatique et dirigé à l'opposé de l'autre rangée de blocs profilés (2, 1).

5. Pneumatique de véhicule pourvu d'un profilé de bande de roulement selon les caractéristiques de l'une au moins des revendications précédentes, les rainures obliques (5, 6) d'une rangée de blocs de profilé (1, 2) étant conçues chacune avec une première partie d'extension (9, 11) au niveau de leur extrémité d'extension formée dans un épaulement de pneumatique et dirigée à l'opposé de l'autre rangée de blocs de profilé (2, 1).

6. Pneumatique de véhicule pourvu d'un profilé de bande de roulement selon les caractéristiques de l'une au moins des revendications précédentes, les rainures obliques (5, 6) comportant le long de leur extension un nombre impair de parties d'extension formées de premières et deuxièmes parties d'extension.

7. Pneumatique de véhicule pourvu d'un profilé de bande de roulement selon les caractéristiques de l'une au moins des revendications précédentes, les rainures obliques (5, 6) comportant le long de leur extension quatre à huit parties d'extension formées de première et deuxièmes parties d'extension.

8. Pneumatique de véhicule pourvu d'un profilé de bande de roulement selon les caractéristiques de l'une au moins des revendications précédentes, les éléments de blocs de profilé (3, 4) d'une rangée de blocs de profilé (1, 2) s'étendant chacun dans la direction axiale A depuis l'épaulement de pneumatique axialement vers l'intérieur par rapport à l'autre rangée de blocs de profilé (2, 1) au-delà du plan équatorial Ä-Ä du pneumatique où ils se terminent.
